# EUROPEAN PATENT APPLICATION

(11) **EP 1 837 819 A1**
(43) Date of publication of application: **26.09.2007**
(21) Application number: 07104411.9
(22) Date of filing: 19.03.2007
(51) Int. Cl.: G06Q 10/00

(54) **Method for managing conflicting schedules in mobile communication terminal**

(30) Priority: 24.03.2006 KR 20060026905
(71) Applicant: Samsung Electronics Co., Ltd., Suwon-si, Gyeonggi-Do (KR)
(72) Inventor: Hwang, Jae-Joon, Gyeonggi-do (KR); Kim, Tae-Kyung, Gyeonggi-do (KR)
(74) Representative: Grünecker, Kinkeldey, Stockmair & Schwanhäusser Anwaltssozietät

(57) **Abstract**

Disclosed is a method for managing conflicting schedules in a mobile communication terminal. The method includes receiving a schedule input by a user in a schedule management mode, determining whether the new schedule currently input overlaps with previously stored schedules when the user completes the setting of the new schedule, and informing the user of the existence of the conflicting schedules when there are conflicting schedules, resulting from the determination. Accordingly, the method enables the user to conveniently recognize and arrange the conflicting schedules.

## Description

The present invention relates generally to a method for managing schedules in a mobile communication terminal, and more particularly to a method for managing a conflicting schedules in a mobile communication terminal, by which the mobile communication terminal can inform a user of the conflicting schedules.

Recently, mobile communication terminals such as cellular phones, Personal Communication System (PCS) terminals, IMT-2000 terminals, and Personal Digital Assistant (PDA) terminals have additionally provided functions such as message transmission and reception, wireless internet, alarm, schedule management and voice communication functions.

A schedule management function has been realized by installing in mobile communication terminals a Personal Information Management System (PIMS), which has been used for conventional electronic-notes and PDAs. For example, a user executes PIMS using a menu selection, and inputs or edits information and the schedules to store those information. Further, the user identifies stored information and obtains necessary data using the PIMS.

Such a schedule management function must be conveniently operable by various types of users. The schedule management function alerts a set time such as an appointment and a morning call time to the user at a scheduled time, to enable efficient management of daily events. Conventional mobile communication terminals include the schedule management function. Therefore, if the user sets a time to alert the schedule in advance, the mobile communication terminal timely alarms the user to remind the user of the corresponding schedule.

However, a conflict can occur when the user inputs a new schedule. That is, the user may forget the previously stored schedule when inputting the new schedule. Accordingly, the user stores the new schedule without the recognizing that the new schedule conflicts with the previously stored schedule. Hence, a problem occurs in that the mobile communication terminal ignores the conflicting schedule and carries out the registration of the schedule set to the scheduled time.

Accordingly, the present invention has been made to solve the above-mentioned problems occurring in the prior art. It is the object of the present invention to provide a method for managing conflicting schedules in a mobile communication terminal, which can inform a user of the conflicting schedules in order to properly inform the user when the schedules are recorded.

This object is solved by the subject matter of the independent claims.

Preferred embodiments are defined in the dependent claims.

In order to accomplish this object, according to an aspect of the present invention, there is provided a method for managing conflicting schedules in a mobile communication terminal, which includes receiving a schedule input by a user in a schedule management mode, determining whether the new schedule currently input overlaps with existing schedules already stored when the user completes the setting of the new schedule, and informing the user of the existence of the conflicting schedules when there are the conflicting schedules, resulting from identification.

In order to accomplish this object, according to another aspect of the present invention there is provided a communication terminal that is adapted to perform the above-defined method.

The present invention will be more apparent from the following detailed description taken in conjunction with the accompanying drawings, in which:
FIG. 1 illustrates a configuration of a mobile communication terminal according to the present invention;
FIG. 2 illustrates processes for managing conflicting schedules in the mobile communication terminal according to the present invention; and
FIGs. 3A-3D illustrates screens on which information on the conflicting schedules is displayed according to the present invention.

Hereinafter, a preferred embodiment of the present invention will be described in detail with reference to the accompanying drawings. The same reference numerals denote the same structural elements throughout the accompanying drawings. In the following description of the present invention, a detailed description of known functions and configurations incorporated herein is omitted for the sake of clarity and conciseness.

The present invention realizes a function for managing conflicting schedules in a mobile communication terminal. To carry out this function, the present invention determines whether a currently recorded schedule conflicts with the existing schedule when a user records his/her schedules in a schedule management mode. If there are conflicting schedules, the present invention enables the mobile communication terminal to inform the user of the conflicting schedules, so that the user can recognize and arrange the conflicting schedules. Thus, the present invention provides a convenient function for the user.

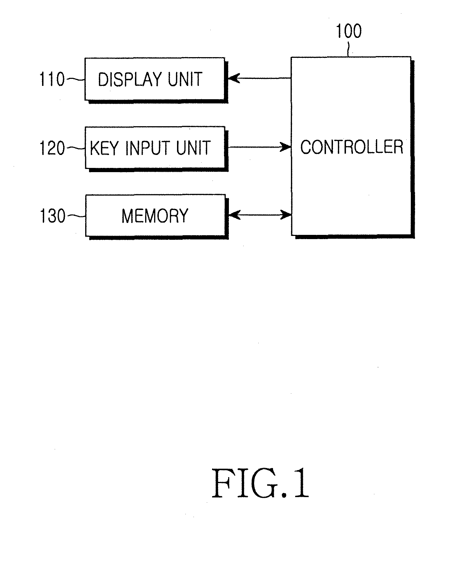

FIG. 1 illustrates a configuration of the mobile communication terminal according to the present invention.

Referring to FIG. 1, the mobile communication terminal according to the present invention includes a controller 100, a display unit 110, a key input unit 120 and a memory 130.

The controller 100 executes a general control operation of the mobile communication terminal, and carries out an operation of controlling a schedule management function according to the present invention as described below. Here, the schedule management function refers to a function for displaying the schedules and giving the user an alarm remind the user of an event such as an appointment.. This schedule management function has been applied to conventional mobile communication terminals.

Specifically, when the user selects the schedule management function, the controller 100 according to the present invention enters the schedule management mode and enables the display unit 110 to display subordinate items of the schedule management function. That is, the display unit 100 displays a screen on which the user records his/her schedules. The user may set alarm information including an event start time, an event end time, a description of events, an alarm function and the number of alarm repetitions, through the schedule setting screen. The operation of setting the day's schedule is identical with the conventional schedule setting operation.

When the user complete the schedule setting, the controller 100 compares scheduled times stored in a memory with currently input scheduled times. Specifically, the controller determines whether the schedules including the event start time and the event end time, which are input by the user, conflict with the schedules stored in advance. If the schedules partially or fully conflict with the previously stored schedules, the controller 100 informs the user of the conflicting schedules in the form of a pop-up window in order to notify the user that there are conflicting schedules. The mobile communication terminals store the input event information even though the previously recorded schedule exists, but output information on the existing schedule on the pop-up window.

Although conflicting of the schedule input by the user with the existing schedule has been described as an example, the mobile communication terminal can be realized so that the controller determines whether the description of the schedule conflicts with the description of the existing schedule.

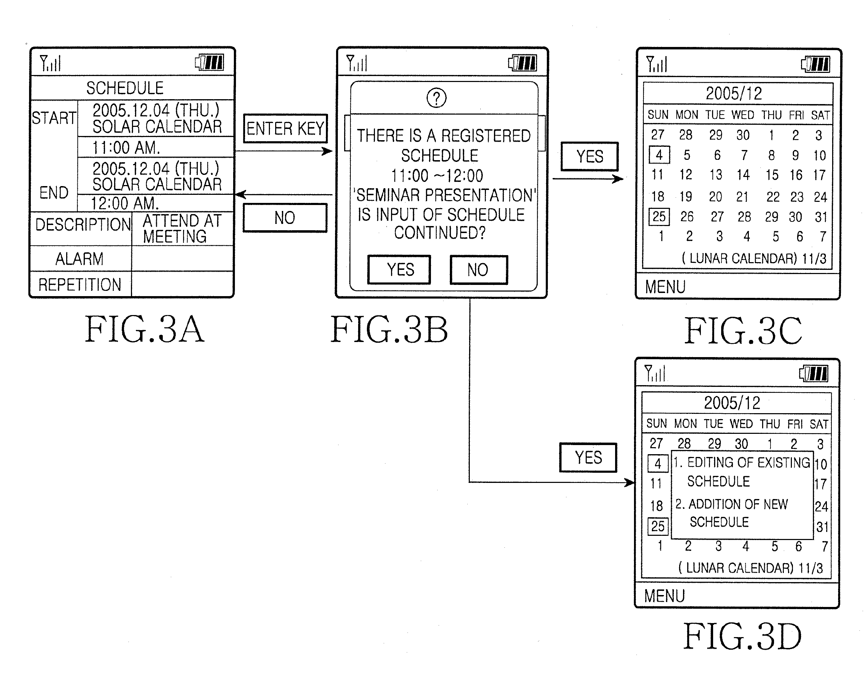

The display unit 110 receives and displays data relating to key input data from a key input unit 120 under the control of the controller 100, or displays the operation state of the mobile communication terminal and various data in the form of icons and characters. The display unit 110 allows the user to identify setting or execution of functions when the user sets or executes the necessary functions. Specifically, the display unit 110 displays a screen for setting the schedules, which is configured according to the present invention as shown in FIG. 3A. When there are conflicting schedules, the display unit 110 displays a message of informing the existence of the conflicting schedule in the form of a pop-up window.

The key input unit 120 has various keys including numeric keys, and provides key input data, which is input by the user, for the controller 100. Specifically, the key input unit 120 outputs key input data corresponding to an input of each key. The key input data output from the key input unit 120 is transmitted to the controller 100. The controller 100 determines which keys of the key input unit 120 input the key input data, and performs an operation corresponding to the key inputs.

Further, the memory 130 connected to the controller 100 includes, for example, a Read Only Memory (ROM) for storing various programs and information required to control the operation of the mobile communication terminal, a Random Access Memory (RAM) for storing various data processed by the controller 100 and data input and output when the controller 100 carries out general operation of the mobile communication terminal, and voice memory. Specially, the memory 130 according to the present invention stores a control program for managing the schedules and information on the schedules set by the user. For example, the memory 130 stores alarm information relating to the event start time, the event end time, the description of the schedules, the audio output of the alarm and the repetition of the alarm sound.

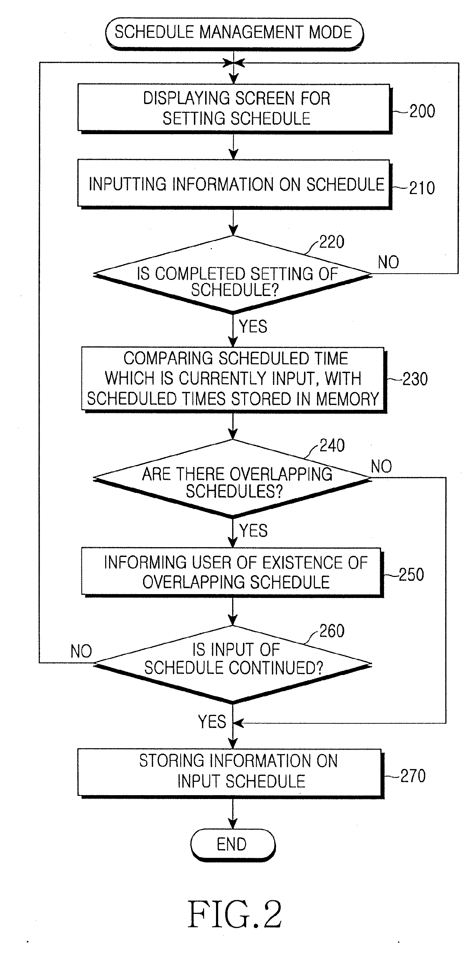

FIG. 2 illustrates processes for managing the conflicting schedules in a mobile communication terminal according to the present invention.

When the user selects a schedule management mode, the controller 100 enables the display unit 110 to display a screen used for setting the schedules in step 200, as shown in FIG. 3A. In step 210, the controller 100 receives from the user information on a desired schedules, which corresponds to each subordinate item of a schedule management menu displayed on the screen. FIG. 3A illustrates a screen used for setting the schedule according to the present invention, in which the user selects, for example, the alarm setting menu relating the event start time, the event end time, the description of the event, setting of the alarm and repetition of the alarm.

The controller 100 determines whether the user finishes setting of the schedule in step 220. Specifically, the controller 100 determines whether the user makes a key input for completing setting of the schedule. For example, when the user presses the enter key of the key input unit 120, the controller 100 determines that the user finishes the operation of inputting the schedule information corresponding to each subordinate item.

Next, the controller 100 compares the scheduled times stored in the memory 130 with the scheduled time currently input in step 230. That is, the controller 100 determines whether there is a conflicting schedule in a list of the schedules stored in the memory 130 with the current input event. For example, the controller 100 compares the existing scheduled times with the currently input scheduled time. The controller 100 determines whether there are conflicting scheduled times based on the result of the identification in step 240. If any one of the existing scheduled times conflicts or overlaps with the current input scheduled time in view of the event start time or the event end time, the controller 100 determines that there are conflicting schedules.

When there are conflicting scheduled times, the controller 100 proceeds to step 250 to inform the user of the existence of the conflicting scheduled times. At this time, the controller 100 may output an alert message in the form of a pop-up window as shown in FIG. 3B.

FIG. 3B illustrates an alarm relating to the conflicting schedule. If there is a conflicting schedule, the mobile communication terminal displays the description of the previously stored schedule, and inquires of the user whether the information currently input by the user should be stored. The present invention informs the user of the existence of the conflicting schedule using the schedule alarm function, and inquires of the user whether it should continues to store the input schedule, in order to give the user an opportunity to change the currently input schedule. According to the present invention, the controller 100 of the mobile communication terminal displays the conflicting schedule in the form of the pop-up window to inform the user of the conflicting schedule, as shown in FIG. 3B. Various known methods for reminding the user of the existence of the conflicting schedules, can be applied to the present invention. For example, the controller 100 of the mobile communication terminal may inform the user of the conflicting schedule by an alarm such as a beep sound or vibration.

The controller 100 displays an alarm message and then determines whether the user decides to store the currently input schedule in step 260. If the user decides to store the currently input schedule regardless of the conflicting schedule, the controller 100 stores the schedule currently input. Since the user actually may make duplicated appointments, it is possible to store the input schedule. However, if the user decides not to store the input schedule in step 260, the controller returns to step 200 to give the user an opportunity to arrange the conflicting schedules.

Moreover, FIG. 3B illustrates a screen informing the user of the existence of the conflicting schedule with the currently input schedule. If the user decides to proceed or there is no other input within a predetermined time, a screen is displayed as shown in FIG. 3C.

FIG. 3C illustrates a calendar after the input of the schedule is completed. When the user completes the input of the schedule, a calendar is displayed in which the date relating to the currently input schedule is focused by highlighting or shading. The user chooses the date using a prompt.

FIG. 3D illustrates a screen for providing a fast interface to the user for the schedule management, in which one of fast menus such as editing of an existing schedule and addition of a new schedule is displayed on the calendar screen shown in FIG. 3C in the form of a pop-up window. When the user has completed the recording of the schedule as shown in FIG. 3B, the screen is displayed as shown in FIG. 3D to allow the user to reduce the movement between the menus. FIG. 3D illustrates the pop-up window through which the user chooses a desired schedule management menu, instead of choosing the editing of the existing schedule or the new schedule through a separate menu step by step.

As described above, the present invention informs the user of the existence of the conflicting schedules, thereby allowing the user to choose a menu to arrange the conflicting schedules. Further, the present invention reminds the user of the previously stored schedule, so as to provide a convenient function for the user.

As described above, the present invention has an advantage in that the user can arrange or be informed of conflicting schedules even though the user does not identify all the schedules which are previously stored in order to set a new schedule. Further, since the present invention informs the user of the conflicting schedules, it is possible to improve the users' convenience.

While the invention has been shown and described with reference to a certain preferred embodiment thereof, it will be understood by those skilled in the art that various changes in form and details may be made therein without departing from the scope of the invention as defined by the appended claims.

## Claims

1. A method for managing conflicting schedules in a mobile communication terminal, the method comprising the steps of:
receiving a schedule newly input by a user in a schedule management mode;
determining whether the newly input schedule conflicts with at least one previously stored schedule when the user completes setting of the newly input schedule; and
informing the user, when conflicting schedules are determined, of an existence of the conflicting schedules.

2. The method as claimed in claim 1, wherein the newly input schedule includes at least one of an event start time, an event end time, a description of the schedule, an output of an alarm and a repetition of an alarm.

3. The method as claimed in claim 2, wherein the determining whether there are the conflicting schedules includes determining whether a scheduled time including the event start time and the event end time of the schedule conflicts with scheduled times of the at least one previously stored schedule.

4. The method as claimed in claim 2, wherein the determining whether there are the conflicting schedules includes determining whether the description of the input schedule is identical with a description of each of the at least one previously stored schedules.

5. The method as claimed in one of claims 1 to 4, wherein when informing the user of the existence of the conflicting schedules, a detailed description of one of the at least one previously stored schedules which conflicts with the newly input schedule is displayed in a pop-up window.

6. The method as claimed in one of claims 1 to 4, wherein when informing the user of the existence of the conflicting schedules, a message inquiring of the user whether the at least one previously stored schedule is to be changed is displayed in a pop-up window.

7. The method as claimed in claim 6, further comprising:
determining whether the user chooses to change the at least one previously stored schedule in the message; and re-inputting a schedule by the user if the user chooses to change the at least one previously stored schedule.

8. The method as claimed in claim 7, further comprising storing the newly input schedule if the user does not choose to change the at least one previously stored schedule.

9. The method as claimed in one of claims 1 to 8, further comprising informing the user of the existence of the conflicting schedules and displaying a calendar screen in which a date relating to the newly input schedule is focused.

10. The method as claimed in claim 9, further comprising displaying a fast menu for editing existing schedules and an addition of a new schedule on the calendar screen in a pop-up window.

11. A mobile communication terminal comprising means for carrying out the steps of the method according to one of claims 1 to 10.
